# EUROPEAN PATENT SPECIFICATION

(11) **EP 1 234 944 B1**
(45) Date of publication and mention of the grant of the patent: **16.06.2010**
(21) Application number: 02251138.0
(22) Date of filing: 20.02.2002
(51) Int. Cl.: E06B 3/22, E06B 3/263

(54) **Window and door frames with a reinforcing member**
Fenster- und Türrahmen mit einem Verstärkungsprofil
Cadres de fenêtre et de porte avec un profilé de renforcement

(30) Priority: 23.02.2001 GB 0104468
(43) Date of publication of application: 28.08.2002
(73) Proprietor: L.B. Plastics Limited, Belper, Derbyshire DE56 2JJ (GB)
(72) Inventor: Hardy, Terence, Derbyshire DE56 2JJ (GB)
(74) Representative: Sales, Robert Reginald

(56) References cited:
- EP-A- 0 586 213
- EP-A- 0 918 129
- GB-A- 2 287 491

## Description

This invention relates to window and door frames and to components for use in the construction of window and door frames.

The thermal performance of new buildings is currently the focus of attention due to the need to conserve energy. One of the major losses of heat from buildings is through doors and particularly windows. Attention has therefore been focused on means of reducing heat loss through these components. In the case of windows attention has traditionally focused on the window glass and has resulted in the development of double and triple glazing and the use of special window glass. However plastic window frames formed from extruded components of hollow section also contribute to heat loss through windows since neither the plastic material nor the air entrapped within it is a particularly good thermal insulator. Moreover many such windows require to incorporate metal reinforcement to impart sufficient strength to the window frame, and heat loss through frames reinforced in this way is increased compared with unreinforced frames.

Various means have previously been proposed for improving the thermal performance of hollow plastic window and door frames whether incorporating reinforcement or not. One such proposal involves injection of foamed plastics material into the frame members to fill the cavities within them see for example GB 2287491 A. While this results in improved thermal performance, it involves an additional injection operation and therefore complicates manufacture and increases cost. A further proposal involves the creation of increased numbers of cavities within the frame structure by increasing the number of internal walls. This serves to reduce air circulation within the frame and results in improved thermal performance. However the creation of multiple relatively small chambers within the frame components prevents incorporation of large size metal reinforcement and therefore limits the size and strength of frames which can be produced from such frame components. In addition the production of frame members incorporating multiple internal chambers increases the plastic material required to produce a frame of given dimensions. Moreover the production of frame members incorporating complex arrangements of internal walls greatly increases the complexity of the tooling required to manufacture the components. Both of the latter features consequently result in unacceptable increases in cost.

The present invention provides a component for use in the construction of a window or door frame comprising an elongated frame member of hollow plastics construction and a reinforcing member located within the frame member, the reinforcing member being of metal or metal alloy construction characterised in that said reinforcing member is of U-shaped cross-section, that coating material extends around the base and sides of the U section and across the open end to form a continuous coating completely encasing the recinforcing member and that the coating material has lower thermal conductivity than that of the reinforcing member itself.

Preferably said coating material has a lower thermal conductivity than the plastics material from which the frame member is constructed.

The invention also provides a method of simultaneously reinforcing and improving the thermal conductivity of a frame component of a window or door, comprising producing a frame component from synthetic plastics material incorporating at least one longitudinally extending internal cavity and providing a metallic reinforcing member, characterised in that the metallic reinforcing member is of U-shaped cross-section, that a coating is applied around the base and sides of the U section and across the open end to form a continuous coating completely encasing the reinforcing member, the coating material having a lower thermal conductivity than that of the reinforcing member itself, and inserting the coated reinforcing member into said cavity within the frame member.

Preferably said coating material has a lower thermal conductivity than the plastics material from which the frame component is constructed.

Preferably some at least of the inner surfaces of the reinforcing member being coated with said coating material. The coating material may extend over all the internal surfaces of the reinforcing member.

The coating material may be the same plastics material as that from which the frame member is constructed. Alternatively the coating material may be a different synthetic plastics material from that from which the frame member is constructed.

Preferably said coating material is a composite material comprising at least thirty per cent by weight of wood. The remainder of the coating material may comprise plastics material. Alternatively the coating material may incorporate a proportion of plastics material and a proportion of one or more other materials in addition to said wood. A preferred material comprises approximately forty per cent by weight of wood and sixty per cent by weight of synthetic plastics material, preferably polyvinylchloride (PVC).

The thickness of the coating is preferably between 1.5 mm. and 10.0 mm. The preferred coating thickness is in the region of 3 - 4 mm.

Preferably the metallic reinforcing member is formed from steel or aluminium.

Preferably said cavity in the frame component occupies a substantial portion of a central region thereof, said coated reinforcing member being dimensioned to form a close fit within said cavity.

The invention also provides a window or door frame constructed from components as aforesaid and a window or door assembly incorporating such a frame.

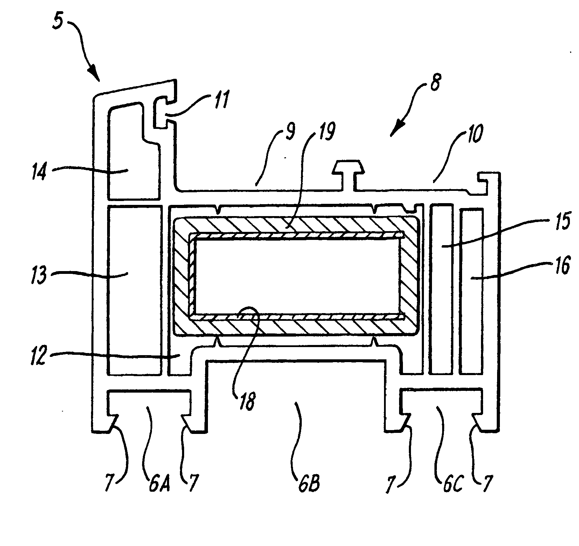

An embodiment of the invention will now be described, by way of example only, with reference to the accompanying drawing which is a transverse cross-section through a window frame component according to the invention.

The drawing shows a window frame component formed from plastics material such as PVC by extrusion and of generally rectangular cross-section with an upstand 5 at one corner. The lower surface of the component as viewed in the drawing incorporates longitudinally extending channels 6A, 6B and 6C adapted to engage the brickwork or the like defining the window opening in which the window is to be installed. The channels 6A and 6C incorporate undercut formations 7 with which tie members (not shown) may be engaged to secure the frame to the surrounding brickwork.

The opposite or upper face of the component as viewed in the drawing defines a shelf 8, a central portion 9 of which is adapted to receive a glazing unit (generally a double glazing unit) and the outer portion 10 of which defines a longitudinally extending channel adapted to receive a glazing bead operable to retain the glazing unit in abutment with the upstand 5. A seal (not shown) may be incorporated in a recess 11 in the upstand 5 for abutment with the surface of the glazing unit retained in the channel 9. In use four such frame components are interconnected at right angles to one another to form a rectangular frame defining the assembled window.

The component incorporates a main internal cavity 12 and a plurality of secondary cavities 13, 14, 15 and 16. The main cavity 12 is adapted to house a reinforcing member serving to strengthen the frame component and thereby enable its use in the construction of windows of larger dimensions or in situations where the window frame is subjected to unusual stresses. In the illustrated embodiment the reinforcing member comprises an elongated component 18, generally formed of rolled steel or extruded aluminium, and of U-shaped cross-section. The component 18 is of lesser external dimensions than the cavity 12 and is surrounded by a coating 19 of an insulating material comprising a composition of wood and plastic. The preferred composition comprises around forty per cent by weight of wood and sixty per cent by weight of PVC, but other proportions may be employed. It is anticipated a wood content of less than about thirty per cent would not produce significant reduction in thermal conductivity since the plastic material itself has relatively poor thermal insulation properties.

The thickness of the coating is selected to provide the maximum degree of improved thermal performance consistent with the reinforcing member providing sufficient strength to withstand the stresses to which the window frame will be subjected in use. Preferably the coating is between 1.5 and 10.0 mm, in thickness and ideally around 3 - 4 mm. in thickness although these thicknesses may vary dependent on the size and construction of the frame member.

By virtue of the arrangement described, a substantial improvement in thermal performance of the frame is attained compared with a frame of similar construction reinforced by a metal component not provided with a surrounding coating. Moreover the arrangement is particularly advantageous compared with previously proposed techniques for improving thermal performance of window and door frames by virtue of the fact that the coated reinforcing member can be simply produced separately from the frame component itself and inserted in essentially the same manner as an uncoated reinforcement. This also enables the thickness and composition of the coating to be closely controlled and its integrity to be checked during production of the reinforcing member compared with techniques which involve injection of material into the frame component after the reinforcement has been inserted. Moreover the coated reinforcing member does not require any modification to be made to the frame component itself, but may be used with existing frame components to provide improved thermal performance compared with use of uncoated metal reinforcement.

Various modifications may be made without departing from the invention. The thickness and composition of the coating may also be varied and the reinforcing member itself may be of different size and wall thickness. Moreover while in the embodiment a single reinforcing member is incorporated in the frame component, more than one coated reinforcing member could be incorporated in certain frame structures if required.

While reference has been made primarily to frame components constructed from PVC and to steel or aluminium reinforcing members, the invention is applicable to window or door frames constructed from other plastics materials and to reinforcing members of different metals or alloys. Moreover while in the illustrated embodiment the coating is confined to the outer surface of the reinforcing member, it could in addition be applied to the inner surface of the reinforcing member. The reinforcing member itself could be corrugated or otherwise strengthened to compensate for the reduction in size of the reinforcing member itself resulting from application of the coating to its outer surface. Moreover while primarily described with reference to the production of window frames, the invention is equally applicable in relation to door frames or reinforced plastic components employed for other purposes.

## Claims

1. A component for use in the construction of a window or door frame comprising an elongated frame member (8) of hollow plastics construction and a reinforcing member (18) located within the frame member, the reinforcing member being of metal or metal alloy construction, said reinforcing member (18) being of U-shaped cross-section, **characterised in that** coating material (19) extends around the base and sides of the U section and across the open end to form a continuous coating completely encasing the reinforcing member (18) and that the coating material has lower thermal conductivity than that of the reinforcing member itself.

2. A component according to claim 1 **characterised in that** the coating material (19) has a lower thermal conductivity than the plastics material from which the frame member (8) is constructed.

3. A component according to claim 1 or 2 **characterised in that** some at least of the inner surfaces of the reinforcing member (18) are coated with said coating material (19).

4. A component according to claim 3 **characterised in that** said coating material (19) extends over all the internal surfaces of the reinforcing member (18).

5. A component according to any of the preceding claims, **characterised in that** said coating material (19) is the same plastics material as that from which the frame member (8) is constructed.

6. A component according to any of claims 1 to 4 **characterised in that** said coating material (19) is a composite material comprising at least thirty per cent by weight of wood.

7. A component according to claim 6 **characterised in that** the remainder of the coating material (19) comprises plastics material.

8. A component according to claim 6 **characterised in that** said coating material (19) comprises a proportion of plastics material and a proportion of one or more other materials in addition to said wood.

9. A component according to claim 7 **characterised in that** said coating material (19) comprises approximately forty per cent by weight of wood and sixty per cent by weight of synthetic plastics material.

10. A component according to any preceding claim **characterised in that** said plastics material is polyvinylchloride (PVC).

11. A component according to any preceding claim **characterised in that** the thickness of said coating (19) is between 1.5 mm, and 10 mm.

12. A component according to claim 11 **characterised in that** the thickness of said coating (19) is between 3 mm, and 4 mm.

13. A component according to any preceding claim **characterised in that** said coated reinforcing member (18) is disposed in a cavity (12) in said frame component (8), the cavity occupying a substantial portion of a central region thereof, and said coated reinforcing member (18) being dimensioned to form a close fit within said cavity (12).

14. A window frame or door frame **characterised in that** it is constructed from a plurality of components according to any preceding claim.

15. A window or door **characterised in that** it incorporates a frame according to claim 14.

16. A method of simultaneously reinforcing and improving the thermal conductivity of a frame component of a window or door, comprising producing a frame component (8) from synthetic plastics material incorporating at least one longitudinally extending internal cavity (12) and providing a metallic reinforcing member (18), **characterised in that** the metallic reinforcing member (18) is of U-shaped cross-section, that a coating is applied around the base and sides of the U section and across the open end to form a continuous coating completely encasing the reinforcing member (18), the coating material having a lower thermal conductivity than that of the reinforcing member itself, and inserting the coated reinforcing member (18) into said cavity (12) within the frame member (18).

17. A method according to claim 16 **characterised in that** said coating material (19) comprises the same plastics material as that from which the frame member (8) is constructed.

18. A method according to claim 16 or 17, **characterised in that** the coating material (19) has a lower thermal conductivity than the material from which the frame component (8) is constructed.

19. A method according to claim 18 **characterised in that** said coating material (19) is a composite material comprising at least thirty per cent by weight of wood.

20. A method according to claim 19 **characterised in that** said coating material (19) comprises at least thirty per cent by weight of wood and at least thirty per cent by weight of plastics material.

21. A method according to any of claims 16 to 20 **characterised in that** the thickness of said coating (19) is between 3 mm. and 4 mm.

22. A window frame or door frame **characterised in that** it is constructed by the method according to any of claims 16 to 21.

23. A window or door **characterised in that** it incorporates a frame according to claim 22.

## Patentansprüche

1. Komponente zur Verwendung beim Bau eines Fenster- oder Türrahmens, mit einem länglichen Rahmenglied (8), das aus einem hohlen Plastmaterial aufgebaut ist, und einem innerhalb des Rahmenglieds angeordneten Verstärkungsglied (18), das aus einem Metall oder einer Metall-Legierung aufgebaut ist, wobei das Verstärkungsglied (18) einen U-förmigen Querschnitt hat, **dadurch gekennzeichnet, dass** sich ein Beschichtungsmaterial (19) um die Basis und die Seiten des U-Schnitts herum und über das offene Ende erstreckt, um eine das Verstärkungsglied (18) vollständig umhüllende kontinuierliche Beschichtung zu bilden, und dass das Beschichtungsmaterial eine geringere Wärmeleitfähigkeit als das Verstärkungsglied selbst hat.

2. Komponente nach Anspruch 1, **dadurch gekennzeichnet, dass** das Beschichtungsmaterial (19) eine geringere Wärmeleitfähigkeit als das Kunststoffmaterial hat, aus dem das Rahmenglied (8) aufgebaut ist.

3. Komponente nach Anspruch 1 oder 2, **dadurch gekennzeichnet, dass** zumindest einige der Innenflächen des Verstärkungsglieds (18) mit dem Beschichtungsmaterial (19) beschichtet sind.

4. Komponente nach Anspruch 3, **dadurch gekennzeichnet, dass** das Beschichtungsmaterial (19) sich über alle Innenflächen des Verstärkungsglieds (18) erstreckt.

5. Komponente nach einem der vorhergehenden Ansprüche, **dadurch gekennzeichnet, dass** das Beschichtungsmaterial (19) das gleiche Kunststoffmaterial ist wie das, aus welchem das Rahmenglied (8) aufgebaut ist.

6. Komponente nach einem der Ansprüche 1 bis 4, **dadurch gekennzeichnet, dass** das Beschichtungsmaterial (19) ein Verbundmaterial ist, das zumindest 30 Gewichtsprozent Holz aufweist.

7. Komponente nach Anspruch 6, **dadurch gekennzeichnet, dass** der Rest des Beschichtungsmaterials (19) Kunststoffmaterial aufweist.

8. Komponente nach Anspruch 6, **dadurch gekennzeichnet, dass** das Beschichtungsmaterial (19) einen Anteil aus Kunststoffmaterial und einen Anteil aus einem oder mehreren anderen Materialien zusätzlich zu dem Holz aufweist.

9. Komponente nach Anspruch 7, **dadurch gekennzeichnet, dass** das Beschichtungsmaterial (19) ungefähr 40 Gewichtsprozent Holz und 60 Gewichtsprozent synthetisches Kunststoffmaterial enthält.

10. Komponente nach einem der vorhergehenden Ansprüche, **dadurch gekennzeichnet, dass** das Kunststoffmaterial Polyvinylchlorid (PVC) ist.

11. Komponente nach einem der vorhergehenden Ansprüche, **dadurch gekennzeichnet, dass** die Dicke der Beschichtung (19) zwischen 1,5 mm und 10 mm beträgt.

12. Komponente nach Anspruch 11, **dadurch gekennzeichnet, dass** die Dicke der Beschichtung (19) zwischen 3 mm und 4 mm beträgt.

13. Komponente nach einem der vorhergehenden Ansprüche, **dadurch gekennzeichnet, dass** das beschichtete Verstärkungsglied (18) in einem Hohlraum (12) in der Rahmen-Komponente (8) angeordnet ist, wobei der Hohlraum einen wesentlichen Abschnitt eines mittigen Bereichs desselben einnimmt, und wobei das beschichtete Verstärkungsglied (18) derart dimensioniert ist, dass es in dem Hohlraum (12) eine eng anliegende Passung bildet.

14. Fensterrahmen oder Türrahmen, **dadurch gekennzeichnet, dass** er aus mehreren Komponenten gemäss einem der vorhergehenden Ansprüche aufgebaut ist.

15. Fenster oder Tür, **dadurch gekennzeichnet, dass** es/sie einen Rahmen nach Anspruch 14 aufweist.

16. Verfahren zum gleichzeitigen Verstärken einer Rahmen-Komponente eines Fensters oder einer Tür und Verbessern ihrer Wärmeleitfähigkeit, mit den folgenden Schritten:
Herstellen einer Rahmenkomponente (8) aus synthetischem Kunststoffmaterial und mit mindestens einem sich in Längsrichtung erstreckenden inneren Hohlraum (12); und Bereitstellen eines Verstärkungsglieds (18) aus Metall, **dadurch gekennzeichnet, dass** das Verstärkungsglied (18) einen U-förmigen Querschnitt hat, dass eine Beschichtung um die Basis und die Seiten des U-Schnitts herum und über das offene Ende aufgetragen wird, um eine das Verstärkungsglied (18) vollständig umhüllende kontinuierliche Beschichtung zu bilden, wobei das Beschichtungsmaterial eine geringere Wärmeleitfähigkeit als das Verstärkungsglied selbst hat; und Einfügen des beschichteten Verstärkungsglieds (18) in den Hohlraum (12) innerhalb des Rahmenglieds (18).

17. Verfahren nach Anspruch 16, **dadurch gekennzeichnet, dass** das Beschichtungsmaterial (19) das gleiche Kunststoffmaterial aufweist wie das, aus welchem das Rahmenglied (8) aufgebaut ist.

18. Verfahren nach Anspruch 16 oder 17, **dadurch gekennzeichnet, dass** das Beschichtungsmaterial (19) eine geringere Wärmeleitfähigkeit als das Material hat, aus dem das Rahmenglied (8) aufgebaut ist.

19. Verfahren nach Anspruch 18, **dadurch gekennzeichnet, dass** das Beschichtungsmaterial (19) ein Verbundmaterial ist, das zumindest 30 Gewichtsprozent Holz aufweist.

20. Verfahren nach Anspruch 19, **dadurch gekennzeichnet, dass** das Beschichtungsmaterial (19) mindestens 30 Gewichtsprozent Holz und mindestens 30 Gewichtsprozent Kunststoffmaterial aufweist.

21. Verfahren nach einem der Ansprüche 16 bis 20, **dadurch gekennzeichnet, dass** die Dicke der Beschichtung (19) zwischen 3 mm und 4 mm beträgt.

22. Fensterrahmen oder Türrahmen, **dadurch gekennzeichnet, dass** er durch das Verfahren gemäss einem der Ansprüche 16 bis 21 aufgebaut ist.

23. Fenster oder Tür, **dadurch gekennzeichnet, dass** das Fenster bzw. die Tür einen Rahmen gemäss Anspruch 22 aufweist.

## Revendications

1. Composant destiné à être utilisé dans la construction d'un cadre de fenêtre ou de porte comprenant un élément de cadre oblong (8) de construction en plastique creuse et un élément de renfort (18) situé à l'intérieur de l'élément de cadre, l'élément de renfort étant de construction métallique ou d'alliage métallique, ledit élément de renfort (18) étant de section transversale en forme de U, **caractérisé en ce qu'**un matériau de revêtement (19) s'étend autour de la base et des côtés de la section en U et sur l'extrémité ouverte pour former un revêtement continu enfermant complètement l'élément de renfort (18) et que le matériau de revêtement possède une conductivité thermique inférieure à celle de l'élément de renfort lui-même.

2. Composant selon la revendication 1, **caractérisé en ce que** le matériau de revêtement (19) possède une conductivité thermique inférieure à celle du matériau plastique à partir duquel l'élément de cadre (8) est construit.

3. Composant selon la revendication 1 ou 2, **caractérisé en ce qu'**au moins certaines des surfaces intérieures de l'élément de renfort (18) sont enduites avec ledit matériau de revêtement (19).

4. Composant selon la revendication 3, **caractérisé en ce que** ledit matériau de revêtement (19) s'étend sur toutes les surfaces internes de l'élément de renfort (18).

5. Composant selon une quelconque des revendications précédentes, **caractérisé en ce que** ledit matériau de revêtement (19) est le même matériau plastique que celui à partir duquel l'élément de cadre (8) est construit.

6. Composant selon une quelconque des revendications 1 à 4, **caractérisé en ce que** ledit matériau de revêtement (19) est un matériau composite comprenant au moins trente pour cent en poids de bois.

7. Composant selon la revendication 6, **caractérisé en ce que** le reste du matériau de revêtement (19) comprend un matériau plastique.

8. Composant selon la revendication 6 **caractérisé en ce que** ledit matériau de revêtement (19) comprend une proportion de matériau plastique et une proportion d'un ou plusieurs autres matériaux en plus dudit bois.

9. Composant selon la revendication 7, **caractérisé en ce que** ledit matériau de revêtement (19) comprend approximativement quarante pour cent en poids de bois et soixante pour cent en poids de matériau plastique synthétique.

10. Composant selon une quelconque revendication précédente, **caractérisé en ce que** ledit matériau plastique est du polychlorure de vinyle (PVC).

11. Composant selon une quelconque revendication précédente, **caractérisé en ce que** l'épaisseur dudit revêtement (19) est entre 1,5 mm et 10 mm.

12. Composant selon la revendication 11, **caractérisé en ce que** l'épaisseur dudit revêtement (19) est entre 3 mm et 4 mm.

13. Composant selon une quelconque revendication précédente, **caractérisé en ce que** ledit élément de renfort enduit (18) est disposé dans une cavité (12) dans ledit composant de cadre (8), la cavité occupant une partie importante d'une région centrale de celui-ci, et ledit élément de renfort enduit (18) étant dimensionné pour former un ajustement serré à l'intérieur de ladite cavité (12).

14. Cadre de fenêtre ou cadre de porte, **caractérisé en ce qu'**il est construit à partir d'une pluralité de composants selon une quelconque revendication précédente.

15. Fenêtre ou porte, **caractérisée en ce qu'**elle incorpore un cadre selon la revendication 14.

16. Procédé de renfort et d'amélioration simultanés de la conductivité thermique d'un composant de cadre d'une fenêtre ou porte, comprenant les étapes consistant à fabriquer un composant de cadre (8) à partir de matériau plastique synthétique incorporant au moins une cavité interne s'étendant longitudinalement (12) et fournir un élément de renfort métallique (18), **caractérisé en ce que** l'élément de renfort métallique (18) est de section transversale en forme de U, qu'un revêtement est appliqué autour de la base et des côtés de la section en U et sur l'extrémité ouverte pour former un revêtement continu enfermant complètement l'élément de renfort (18), le matériau de revêtement possédant une conductivité thermique inférieure à celle de l'élément de renfort lui-même, et insérer l'élément de renfort enduit (18) dans ladite cavité (12) à l'intérieur de l'élément de cadre (18).

17. Procédé selon la revendication 16, **caractérisé en ce que** ledit matériau de revêtement (19) comprend le même matériau plastique que celui à partir duquel l'élément de cadre (8) est construit.

18. Procédé selon la revendication 16 ou 17, **caractérisé en ce que** le matériau de revêtement (19) possède une conductivité thermique inférieure à celle du matériau à partir duquel le composant de cadre (8) est construit.

19. Procédé selon la revendication 18, **caractérisé en ce que** ledit matériau de revêtement (19) est un matériau composite comprenant au moins trente pour cent en poids de bois.

20. Procédé selon la revendication 19, **caractérisé en ce que** ledit matériau de revêtement (19) comprend au moins trente pour cent en poids de bois et au moins trente pour cent en poids de matériau plastique.

21. Procédé selon une quelconque des revendications 16 à 20, **caractérisé en ce que** l'épaisseur dudit revêtement (19) est entre 3 mm et 4 mm.

22. Cadre de fenêtre ou cadre de porte, **caractérisé en ce qu'**il est construit grâce au procédé selon une quelconque des revendications 16 à 21.

23. Fenêtre ou porte, **caractérisé en ce qu'**elle incorpore un cadre selon la revendication 22.
